# EUROPÄISCHE PATENTANMELDUNG

(11) **EP 2 284 409 A1**
(43) Veröffentlichungstag der Anmeldung: **16.02.2011**
(21) Anmeldenummer: 10169764.7
(22) Anmeldetag: 16.07.2010
(51) Int. Cl.: F16C 32/04, F16C 39/02

(54) **Fanglager**

(30) Priorität: 12.08.2009 DE 102009037178
(71) Anmelder: Siemens Aktiengesellschaft, 80333 München (DE)
(72) Erfinder: Kern, Christfried, 02826 Görlitz (DE)

(57) **Zusammenfassung**

Die Erfindung betrifft ein Fanglager (1) mit einem Fanglageinnenring (2), zur Verwendung bei Rotoren mit aktiver Magnetlagerung. Das Fanglager (1) verfügt über ein Verschiebemechanismus (4) der es erlaubt, den Fanglagerinnenring (2) mit Rotor (3) in Eingriff zu bringen. Die Erfindung betrifft weiter einen Rotor (3) mit einer aktiven Magnetlagerung und einem erfindungsgemäßen Fanglager (1).

## Beschreibung

Die Erfindung betrifft ein Fanglager mit einem Fanglagerinnenring zur Verwendung bei Rotoren mit aktiver Magnetlagerung nach dem Oberbegriff des Patentanspruchs 1, sowie ein Rotor mit einer aktiven Magnetlagerung und einem Fanglager.

Magnetlager finden vermehrt Einsatz bei der Lagerung von Rotoren, weil an ihnen keine Reibungsverluste wie an mechanischen Lagern auftreten. Magnetlager haben jedoch den Nachteil, dass es bei einer Störung zu einem kompletten Ausfall der Lagerung kommen kann. Falls es zu dem Ausfall des Magnetlagers während des Betriebes kommt, dreht sich der Rotor unter Umständen noch mit hoher Geschwindigkeit. Aus diesem Grund sind beim Einsatz von aktiven Magnetlagern sogenannte Fanglager vorzusehen, die den Rotor im Falle eines Ausfalls der Magnetlager auffangen. Als Fanglager werden üblicherweise herkömmliche Wälzlager verwendet. Während des Betriebes ist zwischen dem Rotor und dem Wälzlagerinnenring ein Luftspalt vorhanden. Der Rotor wird dabei durch das Magnetlager geführt. Erst beim Ausfall des Magnetlagers kommt der Rotor mit dem Wälzlager in Eingriff. Beim Auftreffen des Rotors auf den Innenring des Fanglagers steht der Innenring trotz des sich drehenden Rotors zunächst still. Erst dann beschleunigt der in das Fanglager fallende Rotor den Innenring auf die Rotordrehzahl. Durch die große Drehzahldifferenz zwischen Rotor und Fanglagerinnenring zu Beginn des Rotorabwurfs ist der Vorgang sehr instabil und führt im schlimmsten Fall zur Zerstörung des Fanglagers und gegebenenfalls des Rotors, vor allem wenn der Rotor im Fanglager in Gegenrichtung springt.

Die Fanglager für einen Rotor müssen deshalb derzeit durch Versuche auf ihr stabiles Verhalten im Falle des Rotorabwurfs erprobt werden. Ziel der Versuche ist die Festlegung eines günstigen Luftspaltes zwischen Rotor und Fanglagerinnenring Im Rotorbetrieb werden die Fanglager aus Sicherheitsgründen nach einer geringen Zahl von Abwürfen ausgetauscht.

Ziel der vorliegenden Erfindung ist es, ein Fanglager mit einem Fanglagerinnenring, zur Verwendung bei Rotoren mit aktiver Magnetlagerung bereitzustellen, das gegenüber dem Stand der Technik unempfindlicher gegen Rotorabwürfe ist und keinem starken Verschleiß unterliegt.

Des Weiteren ist es Ziel der vorliegenden Erfindung einen Rotor mit einer aktiven Magnetlagerung und einem Fanglager bereitzustellen, der keinen nennenswerten Verschleiß auch bei mehreren Rotorabwürfen aufweist.

Die Aufgabe wird hinsichtlich des Fanglagers durch die Merkmale des unabhängigen Patentanspruchs 1 und hinsichtlich des Rotors nach den Merkmalen des unabhängigen Patentanspruchs 8 gelöst.

Vorteilhafte Ausgestaltungen und Weiterbildungen, welche einzeln oder in Kombination miteinander einsetzbar sind, sind Gegenstand der Unteransprüche.

Das erfindungsgemäße Fanglager mit einem Fanglagerinnenring, zur Verwendung bei Rotoren mit aktiver Magnetlagerung, zeichnet sich dadurch aus, dass der Fanglagerinnenring mittels eines Verschiebemechanismus mit dem Rotor in Eingriff bringbar ist. Durch den Verschiebemechanismus kann der Fanglagerinnenring bereits vor oder unmittelbar nach einem Magnetlagerausfall mit dem Rotor in Eingriff gebracht werden. Dadurch wird vermieden, dass der aus seiner Magnetlagerung herunterfallende Rotor mit hoher Drehzahl auf den stehenden Fanglagerring auftrifft. Durch das vorzeitige in Eingriff bringen des Fanglagerinnenrings kann das Fanglager früher anlaufen und die Drehzahldifferenz ist in dem Moment in dem das Fanglager die vollständige Lagerung des Rotors übernehmen muss, bereits wesentlich geringer oder sogar aufgehoben. Hierdurch kommt es zu einem wesentlich geringeren Verschleiß des Fanglagers und eine Zerstörung des Fanglagers kann wirkungsvoll verhindert werden.

Eine vorteilhafte Ausgestaltung der Erfindung sieht vor, dass der Verschiebemechanismus derart ausgebildet ist, dass der Fanglagerinnenring im montierten Zustand, permanent im eingriff mit dem Rotor ist. Das Fanglager dreht sich dabei mit derselben Geschwindigkeit bzw. mit einer geringen Drehzahldifferenz (Schlupf). Die Differenzdrehzahl zwischen dem Fanglagerinnenring und dem Rotor ist dadurch im Falle eines Rotorabwurfs minimal und ein instabiles Verhalten des Rotors im Fanglager kann dadurch wirkungsvoll ausgeschlossen werden. Der Verschleiß des Fanglagers ist gegenüber dem Stand der Technik minimal, wodurch ein auswechseln der Fanglager erst nach einer deutlich längeren Lebensdauer bzw. eines längeren Betriebszyklus notwendig wird.

Eine weitere vorteilhafte Ausgestaltung der Erfindung sieht vor, dass der Verschiebemechanismus derart ausgebildet ist, dass der Fanglagerinnenring im montierten Zustand bei einem Magnetlagerausfall in Eingriff mit dem Rotor gebracht wird. Im Gegensatz zu der zuvor beschriebenen Ausgestaltung der Erfindung befindet sich das Fanglager bzw. der Fanglagerinnenring nicht während des gesamten Betriebs im Eingriff mit dem Rotor. Der Fanglagerinnenring wird erst bei einem Magnetlagerausfall unmittelbar mit dem Rotor in Eingriff gebracht, das heißt der Eingriff erfolgt bereits bevor das Fanglager den Rotor mit seinem vollen Gewicht auffängt und tragen muss. Hierdurch kann das Fanglager bereits Drehzahl aufnehmen, bevor es seine eigentliche Trageaufgabe aufnimmt. Damit erfolgt das Andrehen der Fanglager schneller und schonender als bei dem bislang eingesetzten Fanglagern nach dem Stand der Technik. Ein instabiles Rotorverhalten im Fanglagerbetrieb wird somit weitgehend ausgeschlossen.

Eine besonders vorteilhafte Ausgestaltung der Erfindung sieht vor, dass die Kraft zur Verschiebung des Verschiebemechanismus mittels einer Feder aufgebracht wird. Die Feder eignet sich besonders vorteilhaft, da sie ein schnelles Ansprechverhalten aufweist, sehr wartungsarm und unanfällig ist und zudem eine sehr preiswerte Möglichkeit zur Verstellung des Verschiebemechanismus darstellt.

Eine weitere vorteilhafte Ausgestaltung der Erfindung sieht vor, dass die Kraft zur Verschiebung des Verschiebemechanismus pneumatisch oder hydraulisch aufgebracht wird. Die Verschiebung des Verschiebemechanismus mittels Pneumatik oder Hydraulik bietet sich insbesondere dann an, wenn im System bereits ein vorhandener hydraulischer oder pneumatischer Druck vorliegt, der zur Verschiebung genutzt werden kann.

Bevorzugt ist das Fanglager als Wälzlager ausgebildet. Wälzlager sind in einer Vielzahl unterschiedlicher Größen standardmäßig und preiswert erhältlich. Sie sind weitgehend wartungsfrei und können auch hohe Kräfte tragen.

Weiterhin vorteilhaft umfasst das Fanglager ein Fanglagergehäuse, in dem der Verschiebemechanismus integriert ist. Durch die gemeinsame Unterbringung von Fanglager und Verschiebemechanismus in einem gemeinsamen Fanglagergehäuse ergibt sich eine kompakte Bauform und die Montage des Fanglagers gestaltet sich besonders einfach.

Dem erfindungsgemäßen Fanglager liegt somit der Gedanke zugrunde, dass Fanglager bereits vor dem eigentlichen Fanglagerbetrieb auf eine Drehzahl zu bringen, die annähernd der Rotordrehzahl entspricht. Dies kann entweder dadurch erfolgen, dass das Fanglager während des gesamten Rotorbetriebs mit der Rotorsrehzahl mitdreht oder, dass bei einem Magnetlagerausfall das Fanglager unmittelbar, das heißt vor dem Fanglagerbetrieb in Eingriff mit dem Rotor gebracht wird. Durch das erfindungsgemäße Fanglager wird somit verhindert, dass der Rotor bei einem Magnetlagerausfall mit hoher Drehzahl auf das noch stehende Fanglager auftritt und es dadurch zu Instabilitäten und damit zu einer Beschädigung und im schlimmsten Fall zu einer Zerstörung des Fanglagers kommen kann. Das erfindungsgemäße Fanglager ist somit besonders verschleißarm und ein Austausch der Fanglager muss erst nach wesentlich längeren Betriebszeiten als zurzeit erfolgen. Das Fanglager eignet sich insbesondere zur Verwendung von Rotoren bei Dampfturbinen.

Ausführungsbeispiele und weitere Vorteile der Erfindung werden im Folgenden anhand der Zeichnungen erläutert. Es zeiget schematisch:
- Figur 1a: ein erstes Ausführungsbeispiel einer Rotoranordnung mit einem erfindungsgemäßen Fanglager im Normalbe- trieb;
- Figur 1b: die in Figur 1a gezeigte Rotoranordnung im Fangla- gerbetrieb;
- Figur 2a: ein zweites Ausführungsbeispiel einer Rotoranord- nung mit einem erfindungsgemäßen Fanglagers im Normalbetrieb;
- Figur 2b: die in Figur 2a gezeigte Rotoranordnung im Fangla- gerbetrieb.

Bei den Figuren handelt es sich jeweils um stark vereinfachte Darstellungen, bei denen nur die wesentlichen, zur Beschreibung der Erfindung notwendigen, Bauteile gezeigt sind.

Gleiche bzw. funktionsgleiche Bauteile sind figurübergreifend mit den gleichen Bezugszeichen versehen.

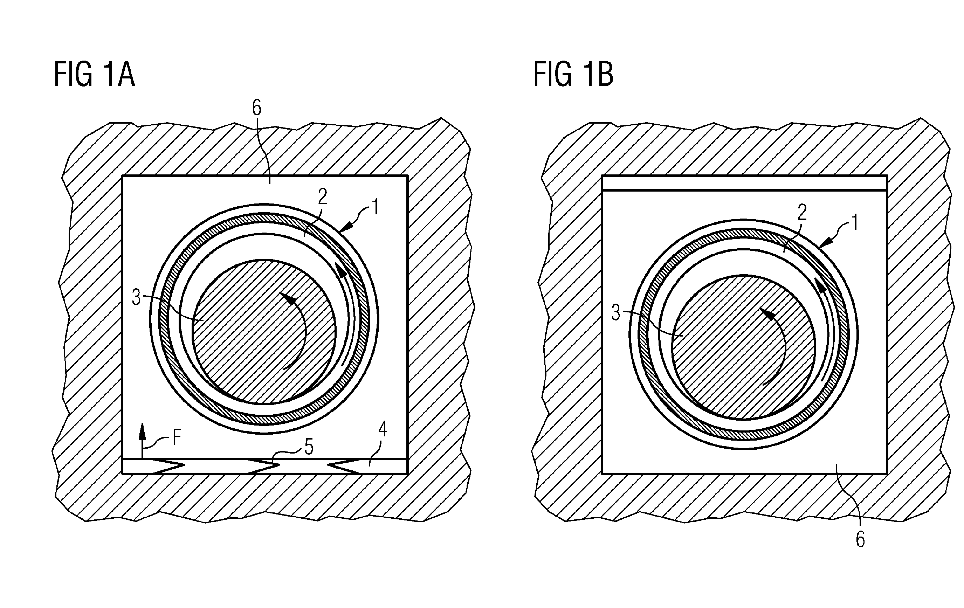

Figur 1a zeigt eine Rotoranordnung im Normalbetrieb. Im Normalbetrieb übernehmen Magnetlager die Lagerung des Rotors 3. Die Magnetlager sind in Figur 1a nicht dargestellt. Die Rotoranordnung umfasst ein Fanglager 1, welches im Falle eines Magnetlagerausfalls die Lagerung des Rotors 3 übernimmt. Das Fanglager 1 ist mit einem Verschiebemechanismus 4 gekoppelt, mittels dessen der Fanglagerinnenring 2 in Eingriff mit dem Rotor 3 bringbar ist. Die Kraft zur Verschiebung des Verschiebemechanismus 4 wird mittels einer Feder 5 aufgebracht, die sich gegen das Fanglagergehäuse 6, in dem das Fanglager 1 integriert ist, abstützt.

Im dargestellten Normalbetrieb drückt die Feder 5 das Fanglagergehäuse 6 und das darin integrierte Fanglager 1 mit einer Kraft F nach oben, dabei gelangt der Fanglagerinnenring 2 in Eingriff mit dem sich drehenden Rotor 3 und bewegt sich dadurch im Normalbetrieb mit der Rotordrehzahl.

Bei der Auslegung der Federn ist zu beachten, dass die Anpresskraft groß genug ist, damit das Fanglager sich schlupffrei zum Rotor bewegen kann. Die Anpresskraft F darf aber auch nicht zu groß sein, da sonst die Lebensdauer der Fanglager abnimmt.

Die Anpresskraft F kann anstelle der Federn 5 auch auf andere Weise beispielsweise pneumatisch oder hydraulisch aufgebracht werden. Dies bietet sich insbesondere dann an, wenn im System ein vorhandener hydraulischer oder pneumatischer Druck bzw. eine hydraulische oder pneumatische Steuerung oder Regelung vorhanden ist.

Als Fanglager können insbesondere Wälzlager verwendet werden. Diese gibt es in einer großen Anzahl unterschiedlicher Größen und mit unterschiedlichen Tragkräften. Die Wälzlager sind darüber hinaus wartungsfrei und eignen sich gut für die Verwendung als Fanglager. Selbstverständlich können auch Gleitlager als Fanglager eingesetzt werden, ohne dass der Bereich der Erfindung dadurch verlassen wird.

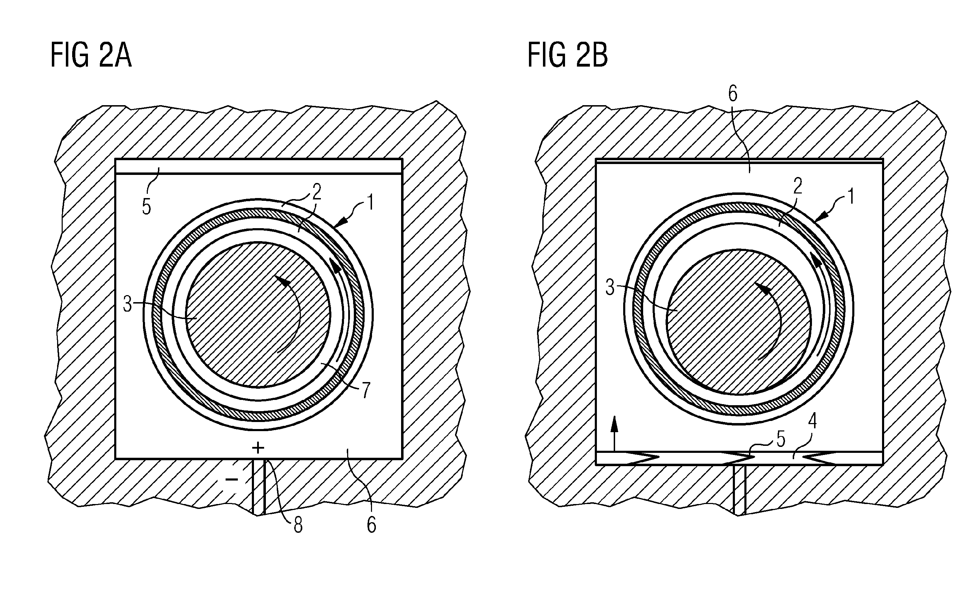

Figur 2a zeigt ein weiteres Ausführungsbeispiel einer Rotoranordnung im Normalbetrieb. Der Rotor 3 ist dabei reibungsfrei über aktive Magnetlager gelagert, die in Figur 2a nicht näher dargestellt sind. Die Rotoranordnung verfügt wiederum über ein Fanglager 1 welches in einem Fanglagergehäuse 6 angeordnet ist. Das Fanglager 1 sowie das Fanglagergehäuse 6 können über eine Verschiebemechanismus 4 (siehe Figur 2b) radial zur Rotorachse verschoben werden. Hierdurch kann der Fanglagerinnenring 2 mit dem Rotor 3 in Eingriff gebracht werden. Im Normalbetrieb ist zwischen dem Rotor 3 und dem Fanglagerinnenring 2 ein Luftspalt 7 vorhanden. Das Fanglager 1 sowie das Fanglagergehäuse 6 werden hierzu im Normalbetrieb durch einen Aktivmagneten 8 in einer Ausgangsposition gehalten, die den Luftspalt 7 zwischen dem Rotor 3 und dem Fanglagerinnenring 2 gewährleistet. Das Fanglager 1 sowie das Fanglagergehäuse 6 sind dabei über den Aktivmagneten 8 gegenüber einer Feder 5 vorgespannt. Diese Fanglagerarretierung hält das Fanglager 1 während des normalen Magnetlagerbetriebs in seiner Ausgangslage. Erst beim Ausfall der Magnetlagerung löst sich die Fanglagerarretierung und das Fanglager 1 wird durch die freigegebene Federkraft mit dem Fanglagerinnenring 2 gegen den Rotor 3 gedrückt. Dadurch erfolgt das Andrehen des Fanglagers 1 schneller und schonender als ohne Federung. Das Fanglager 1 erreicht damit bereits eine nennenswerte Drehzahl bevor es seine eigentliche Lagerfunktion aufnehmen muss. Die Eintrittswahrscheinlichkeit für ein instabiles Rotorverhalten wird dadurch deutlich reduziert und der Verschleiß des Fanglagers 1 wird ebenfalls deutlich reduziert. Die Sicherheit bei einem Magnetlagerausfall bzw. bei einem Rotorabwurf wird dadurch größer und die Anzahl der zulässigen Rotorabwürfe bis zum Austausch des Fanglagers erhöht sich erheblich.

Das erfindungsgemäße Fanglager unterliegt somit einem wesentlich geringeren Verschleiß als die bislang verwendeten Fanglager. Es eignet sich insbesondere zur Verwendung bei Dampfturbinen, da hier ein Austausch der Fanglager mit einem Ausfall der gesamten Dampfturbine einher geht und daher möglichst lange vermieden werden muss.

## Patentansprüche

1. Fanglager (1) mit einem Fanglagerinnenring (2), zur Verwendung bei Rotoren (3) mit aktiver Magnetlagerung, **dadurch gekennzeichnet, dass**
der Fanglagerinnenring (2) mittels eines Verschiebemechanismus (4) mit dem Rotor (3) in Eingriff bringbar ist.

2. Fanglager (1) nach Anspruch 1,
**dadurch gekennzeichnet, dass**
der Verschiebemechanismus (4) derart ausgebildet ist, dass der Fanglagerinnenring (2) im montierten Zustand, permanent im Eingriff mit dem Rotor (3) ist.

3. Fanglager (1) nach Anspruch 1,
**dadurch gekennzeichnet, dass**
der Verschiebemechanismus (4) derart ausgebildet ist, dass der Fanglagerinnenring (2) im montierten Zustand, bei einem Magnetlagerausfall in Eingriff mit dem Rotor (3)gebracht wird.

4. Fanglager (1) nach einem der Ansprüche 1 bis 3,
**dadurch gekennzeichnet, dass**
die Kraft zur Verschiebung des Verschiebemechanismus (4) mittels einer Feder (5) aufgebracht wird.

5. Fanglager (1) nach einem der Ansprüche 1 bis 3,
**dadurch gekennzeichnet, dass**
die Kraft zur Verschiebung des Verschiebemechanismus (4) pneumatisch oder hydraulisch aufgebracht wird.

6. Fanglager (1) nach einem der Ansprüche 1 bis 5,
**dadurch gekennzeichnet, dass**
dass Fanglager (1) ein Wälzlager ist.

7. Fanglager (1) nach einem der Ansprüche 1 bis 6,
**dadurch gekennzeichnet, dass**
Fanglager (1) ein Fanglagergehäuse (6) umfasst, in dem der Verschiebemechanismus (4) integriert ist.

8. Rotor (3) mit einer aktiven Magnetlagerung und einem Fanglager (1) nach einem der Ansprüche 1 bis 7.
